# EUROPÄISCHE PATENTANMELDUNG

(11) **EP 1 394 678 A1**
(43) Veröffentlichungstag der Anmeldung: **03.03.2004**
(21) Anmeldenummer: 02019208.4
(22) Anmeldetag: 27.08.2002
(51) Int. Cl.: G06F 11/14

(54) **Verfahren und Vorrichtung zur Übertragung von Daten von einem ersten in einen zweiten Speicher**

(71) Anmelder: SIEMENS AKTIENGESELLSCHAFT, 80333 München (DE)
(72) Erfinder: Frank, Claus-Andreas, 81475 München (DE); Görbing, Andrej, 10318 Berlin (DE); Mark, Manfred, 2212 Gross-Engelstein (AT); Strasser, Roland, 1190 Wien (AT); Tan, Hok-Tjhoen, 1210 Wien (AT)
(74) Vertreter: Berg, Peter, Dipl.-Ing.

(57) **Zusammenfassung**

Verfahren und Vorrichtung zur Übertragung von Daten von einem ersten in einen zweiten Speicher.

Es wird ein Verfahren zur Übertragung von Daten von einem ersten in einen zweiten Speicher sowie eine Vorrichtung zur Übertragung angegeben, wobei während der Datenübertragung laufend Aufträge empfangen werden, Transaktionen (TAx) auf Teile dieser Daten anzuwenden. Erfindungsgemäß werden die Daten in mehrere Datenbereiche geteilt und die Datenbereiche in Folge nur dann übertragen, wenn für diese keine Transaktionen (TAx) mehr anstehen, wobei die Übertragung eines Datenbereichs einer Transaktion (TAx) auf diesen Datenbereich gleichgesetzt ist. Weiterhin werden während und nach der Übertragung eines Datenbereichs empfangene Aufträge, Transaktionen (TAx) auf diesen Datenbereich anzuwenden, ausgeführt, sobald die Übertragung beendet ist.

## Beschreibung

Die Erfindung betrifft ein Verfahren zur Übertragung von Daten von einem ersten Speicher in einen zweiten Speicher, bei dem laufend Aufträge empfangen werden, Transaktionen auf Teile dieser Daten anzuwenden. Weiterhin betrifft die Erfindung eine Vorrichtung zur Durchführung des erfindungsgemäßen Verfahrens.

Die Übertragung von Daten von einem ersten Speicher in einen zweiten Speicher ist ein im täglichen Leben häufig durchgeführter Vorgang, beispielsweise das Sichern von Daten auf eine beziehungsweise Laden von Daten von einer Festplatte, die Datenfernübertragung und so weiter. Charakteristisch ist dabei, dass der Übertragungsvorgang unterbrechungsfrei erfolgt, das heißt während der Übertragung der Daten der Zugriff auf dieselben von anderer Stelle her unterbunden wird. Aufträge, Transaktionen auf diese Daten anzuwenden, beispielsweise das Schreiben, Verändern oder Lesen, werden daher abgewiesen beziehungsweise so lange verzögert, bis die Übertragung abgeschlossen ist.

Durch zunehmend leistungsfähigere Technologie erfolgt dieser Vorgang vergleichsweise rasch, sodass kaum Zugriffskonflikte auftreten beziehungsweise schnell gelöst werden können. Einer gegensätzlichen Entwicklung folgend, nämlich dem zunehmenden Umfang von Daten, wird die Lösung von Zugriffskonflikten jedoch wieder erschwert. Insbesondere bei der Sicherung von großen Datenmengen, etwa einer Datenbank in einem Telekommunikationsnetz, die überdies in verteilter Form vorliegen kann, sind Übertragungszeiten von mehreren Stunden möglich. Dieser Umstand stellt ein schwerwiegendes technisches Problem dar, da in dieser Zeit kein Zugriff auf die Daten erfolgen kann, sodass Ereignisse, die eine Veränderung von Daten erfordern, eine Inkonsistenz der Daten zwischen erstem und zweitem Speicher verursachen.

Aufgabe der Erfindung ist es daher, ein Verfahren anzugeben, welches die Übertragung von Daten von einem ersten Speicher in einen zweiten Speicher verbessert.

Die Aufgabe wird mit einem Verfahren der eingangs genannten Art gelöst,
- bei dem die Daten in mehrere Datenbereiche geteilt werden,
- bei dem ein Datenbereich dann übertragen wird, wenn für diesen keine Transaktionen mehr anstehen und
- bei dem weitere, während und nach der Übertragung empfangene Aufträge, Transaktionen auf diesen Datenbereich anzuwenden, ausgeführt werden, sobald die Übertragung beendet wird.

Erfindungsgemäß werden hier Daten, etwa eine verteilte Datenbank in einem Telekommunikationsnetz, in mehrere Bereiche geteilt, bevor sie von einem ersten Speicher in einen zweiten Speicher transferiert werden.

Durch die Teilung der Daten ist es möglich, für jeden Datenbereich getrennt festzustellen, ob für diesen Transaktionen anstehen. Trifft dies nicht zu, wird der'betreffende Datenbereich übertragen, ansonsten wird die Übertragung so lange verzögert, bis keine Transaktionen mehr anstehen. Dies ist nötig, da in der Regel immer nur eine Operation auf einen Speicherbereich zulässig ist.

Weiterhin ist es möglich, dass während der eigentlichen Übertragung weitere Aufträge für Transaktionen empfangen werden. In diesem Fall wird die Transaktion so lange verzögert, bis die Übertragung beendet wurde.

Insgesamt kann so die Wartezeit bis zum Beginn einer Übertragung oder einer Transaktion gegenüber aus dem Stand der Technik bekannten Lösungen beträchtlich verkürzt werden. Durch das erfindungsgemäße Verfahren kommt es auch zu keinen oder nur sehr kurz andauernden Inkonsistenzen zwischen den Inhalten der beiden Speicher.

Besonders vorteilhaft ist es, wenn alle anstehenden Transaktionen in eine Warteschlange gereiht und anschließend sequentiell abgearbeitet werden, wobei die Übertragung eines Datenbereichs einer Transaktion auf diesen Datenbereich gleichgesetzt wird.

Auf diese Weise können eventuell vorhandene Mechanismen zur Verwaltung von Transaktionen vorteilhaft auch für die Übertragung des Datenbereichs weiterverwendet werden. Die Übertragung wird hier einer Transaktion gleichgesetzt und auch als solche weiterverarbeitet, das heißt in eine Warteschlange gereiht und in entsprechender Weise ausgeführt. Das erfindungsgemäße Verfahren kann so besonders einfach umgesetzt werden.

Vorteilhaft ist es weiterhin,
- wenn für alle Datenbereiche eine einzige Warteschlange gemeinsam genutzt wird und
- wenn die Transaktionen bezogen auf die einzelnen Datenbereiche sequentiell, bezogen auf die gesamte Warteschlange jedoch zumindest teilweise parallel, abgearbeitet werden.

Anstelle mehrerer, jedem Datenbereich einzeln zugeordneter Warteschlangen kann auch eine einzige Warteschlange für alle Bereiche gemeinsam genutzt werden. Hierbei werden alle anstehenden Transaktionen - und auch Übertragungen eines Datenbereichs - in einer Warteschlange gereiht. Um die Bearbeitung nicht unnötig zu verlängern, wird diese aber nicht global gesehen sequentiell abgearbeitet, sondern bezogen auf die einzelnen Datenbereiche. Das heißt für einen bestimmten Datenbereich kann immer nur eine, für die gesamte Warteschlange können aber mehrere Transaktionen gleichzeitig ausgeführt werden.

Eine weitere vorteilhafte Ausgestaltung der Erfindung ist mit einem Verfahren gegeben,
- bei dem als erster Speicher ein flüchtiger Speicher vorgesehen wird,
- bei dem als zweiter Speicher ein nicht flüchtiger Speicher vorgesehen wird,
- bei dem als Transaktionen Lese- und Schreibvorgänge vorgesehen werden,
- bei dem Lesevorgänge nur auf den flüchtigen Speicher angewendet werden und
- bei dem Schreibvorgänge auf den flüchtigen und nicht flüchtigen Speicher angewendet werden.

Erfindungsgemäß werden hier Daten, beispielsweise eine verteilte Datenbank in einem Telekommunikationsnetz, von einem flüchtigen, schnell zugreifbaren RAM-Speicher von Zeit zu Zeit in einen nicht flüchtigen Speicher, etwa eine oder mehrere Festplatten, übertragen, um eine Sicherungskopie der Datenbank anzufertigen.

Lesevorgänge werden - da Daten hierbei nicht verändert werden - nur auf den flüchtigen Speicher angewendet und können so sehr schnell ausgeführt werden. Schreibvorgänge beeinflussen Daten und werden, um so vorteilhaft Inkonsistenzen zwischen den Inhalten der beiden Speicher zu vermeiden, auf den flüchtigen und auf den nicht flüchtigen Speicher angewendet. Das erfindungsgemäße Verfahren kombiniert daher schnelle Zugriffsmöglichkeit auf Daten und Sicherheit der Daten auf besonders effiziente Weise.

Günstig ist es auch, wenn die Datenbereiche auf dem nicht flüchtigen Speicher als Dateien organisiert werden. Somit wird einem Datenbereich eine natürliche Organisationsstruktur zum Beispiel einer Festplatte zugewiesen. Der Zugriff und die Verwaltung der Daten gestaltet sich daher besonders einfach.

Vorteilhaft ist es weiterhin, dass als Datenbereich alle Instanzen einer Objektklasse vorgesehen werden. Hierbei werden logisch zusammenhängende Daten in einem Datenbereich zusammengefasst und in Folge als eine Einheit weiterverarbeitet.

Darüber hinaus ist es günstig, wenn in einem Datennetz zu verteilt vorliegenden Daten vorhandene Transaktionen zentral koordiniert werden. Die Archivierung der Daten kann dabei auf einem oder mehreren zentralen Speichern erfolgen, während die einzelnen Prozesse zentral gesteuert werden, um etwa Zugriffskonflikte zu vermeiden.

Die Aufgabe der Erfindung wird auch mit einer Vorrichtung zur Durchführung aller Schritte des erfindungsgemäßen Verfahrens gelöst,
- wobei diese eine Schnittstelle zu einem ersten Speicher und zu einem zweiten Speicher sowie eine Schnittstelle zum Empfang von Aufträgen für Transaktionen umfasst,
- wobei Mittel zur Teilung der zu übertragenden Daten in mehrere Datenbereiche vorgesehen sind,
- wobei Mittel zur Übertragung eines Datenbereichs vom ersten Speicher in den zweiten Speicher, abhängig davon, ob für diesen Datenbereich Transaktionen anstehen, vorgesehen sind und
- wobei Mittel zur Ausführung von Aufträgen für Transaktionen auf einen Datenbereich, abhängig davon, ob dessen Übertragung vom ersten Speicher in den zweiten Speicher im Gang ist, vorgesehen sind.

Die erfindungsgemäße Vorrichtung bietet eine günstige Möglichkeit, Daten von einem ersten Speicher in einen zweiten Speicher zu transferieren. Die bereits für das erfindungsgemäße Verfahren erwähnten Vorteile gelten dabei gleichermaßen auch für die angegebene Vorrichtung.

Besonders vorteilhaft ist es dabei, wenn die Vorrichtung eine Warteschlange zur Reihung und sequentiellen Abarbeitung aller anstehenden Transaktionen umfasst, wobei die Übertragung eines Datenbereichs einer Transaktion auf diesen Datenbereich gleichgesetzt ist.

Eine gegebenenfalls ohnehin vorhandene Warteschlange zur Reihung und sequentiellen Abarbeitung aller anstehenden Transaktionen braucht daher nur um die Möglichkeit ergänzt werden, die Übertragung eines Datenbereichs einer Transaktion auf diesen Datenbereich gleichzusetzen, damit diese erfindungsgemäß eingesetzt werden kann. Die Erfindung kann somit besonders einfach in die Praxis umgesetzt werden.

Vorteilhaft ist es weiterhin,
- wenn die Vorrichtung eine einzige Warteschlange für alle Datenbereiche gemeinsam umfasst und
- wenn die Vorrichtung Mittel zur sequentiellen Abarbeitung der Transaktionen bezogen auf die einzelnen Datenbereiche beziehungsweise zur zumindest teilweise parallelen Abarbeitung der Transaktionen bezogen auf die gesamte Warteschlange umfasst.

Bei dieser Variante der Erfindung wird die Anzahl der erforderlichen technischen Mittel, nämlich der Warteschlangen, auf ein Minimum reduziert. Eine Umsetzung der Erfindung kann daher besonders effizient erfolgen.

Die Erfindung wird anhand eines in den Figuren dargestellten Ausführungsbeispiels näher erläutert, welches die erfindungsgemäße Bearbeitung von Transaktionen betrifft.

Es zeigen:
Figur 1: eine Warteschlangenverwaltung in Form einer Tabelle in einem Initialzustand;
Figur 2: die Warteschlangenverwaltung gemäß Figur 1 in einem zweiten Zustand;
Figur 3: die Warteschlangenverwaltung gemäß Figur 1 in einem dritten Zustand;
Figur 4: die Warteschlangenverwaltung gemäß Figur 1 in einem vierten Zustand;

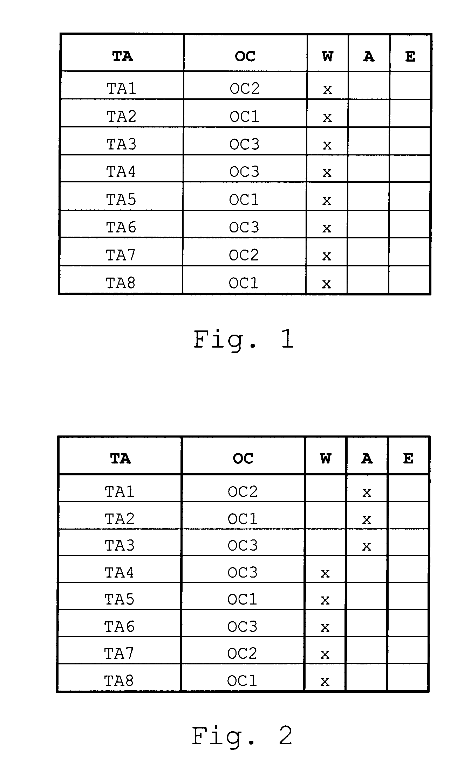

Figur 1 zeigt eine Warteschlangenverwaltung in Form einer Tabelle, welche fünf Spalten umfasst. In der ersten Spalte TA sind die auszuführenden Transaktionen TAx eingetragen. In der zweiten Spalte OC ist angegeben, auf welche Objektklassen OCx die jeweilige Transaktion TAx angewandt wird. Die dritte Spalte W, die vierte Spalte A, sowie die fünfte Spalte E ist zur Angabe des Bearbeitungszustandes einer Transaktion TAx vorgesehen, wobei in der dritten Spalte W die wartenden Transaktionen TAx, in der vierten Spalte A die aktiven Transaktionen TAx und in der fünften Spalte E die beendeten Transaktionen TAx gekennzeichnet werden.

Die Warteschlangenverwaltung beinhaltet in dem in der Figur 1 dargestellte Initialzustand eine erste bis achte Transaktion TA1..TA8, welche in aufsteigender Reihenfolge zeilenweise in die Tabelle eingetragen sind. Die zweite, die fünfte und die achte Transaktion TA2, TA5 und TA8 werden dabei auf die erste Objektklasse OC1 angewandt, die erste und die siebente Transaktion TA1 und TA7 auf die zweite Objektklasse OC2, und die dritte, die vierte sowie die sechste Transaktion TA3, TA4 und TA6 auf die dritte Objektklasse OC3. Alle Transaktionen TAx befinden sich zu diesem Zeitpunkt im Wartezustand.

Formal werden alle Transaktionen TAx gleich behandelt, jedoch wird als inhaltliche Unterscheidung angenommen, dass die erste, die zweite und die sechste Transaktion TA1, TA2 und TA6 dazu dienen, die Instanzen der zugeordneten Objektklassen OC2, OC1 und OC3 vom ersten auf den zweiten Speicher zu übertragen, und die restlichen Transaktionen für Lese- oder Schreibzugriffe vorgesehen sind.

Die Funktion der dargestellten Anordnung ist wie folgt:

Ausgehend vom Initialzustand wird in aufsteigender Reihenfolge geprüft, welche Transaktionen TAx gestartet werden können. Da für die zweite Objektklasse OC2 noch keine aktive Transaktion TAx ansteht, wird die erste Transaktion TA1 gestartet. Desgleichen wird die zweite und die dritte Transaktion TA2 und TA3 gestartet, weil für die zugeordneten Objektklassen OC1 und OC3 ebenfalls keine anderen Transaktionen TAx anstehen.

Die vierte bis achte Transaktion TA4..TA8 bleiben vorerst hingegen im Wartezustand, weil diese allesamt auf bereits bearbeitete Objektklassen OCx angewendet werden.

Der damit charakterisierte Zustand in der Warteschlangenverwaltung ist in der Figur 2 dargestellt. Darin ist für die erste bis dritte Transaktion TA1..TA3 der Aktivzustand, für die vierte bis achte Transaktion TA4..TA8 der Wartezustand angegeben.

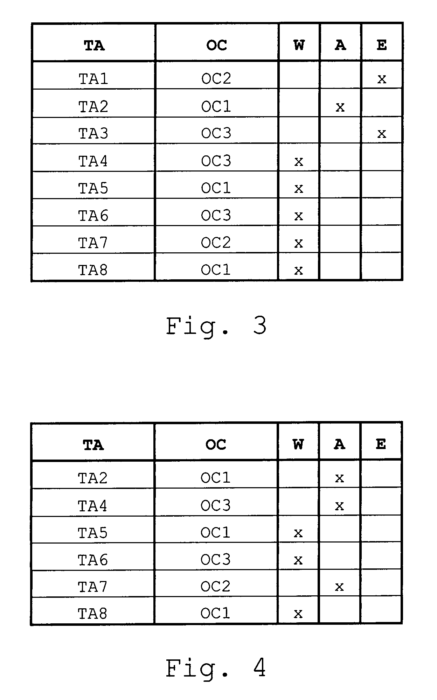

Die erste bis dritte Transaktion TA1..TA3 werden parallel abgearbeitet, wobei angenommen wird, dass die dritte Transaktion TA3 am wenigsten Zeit beansprucht. Vom zugeordneten Bearbeitungsprozess wird beim Abschluss der dritten Transaktion TA3 in Folge eine entsprechende Meldung an die Warteschlangenverwaltung gesendet. Die dritte Transaktion TA3 wird daraufhin in der fünften Spalte E als beendet gekennzeichnet. Kurz darauf werde auch die erste Transaktion TA1 beendet. Der daraus resultierende Zustand ist in Figur 3 dargestellt. Die zweite Transaktion TA2 befindet sich also weiterhin im Aktivzustand, die erste und die dritte Transaktion TA1 und TA3 dagegen im Endzustand und die vierte bis achte Transaktion TA4..TA8 im Wartezustand.

In Folge wird wiederum in aufsteigender Reihenfolge geprüft, welche der wartenden Transaktionen TAx gestartet werden können. Die erste und die dritte Transaktion TA1 und TA3 befinden sich im Endzustand und werden aus der Warteschlange entfernt. Danach wird die vierte Transaktion TA4 gestartet, weil auf die zugeordnete, dritte Objektklasse OC3 keine Transaktion TAx angewandt wird. Die fünfte und die sechste Transaktion TA5 und TA6 können dagegen nicht gestartet werden, weil auf die zugeordneten Objektklassen OC1 und OC3 bereits andere Transaktionen angewandt werden. Die siebente Transaktion TA7 wird dagegen gestartet, weil für die zugeordnete, zweite Objektklasse OC2 keine anderen Aufträge anstehen. Dieser Zustand ist in Figur 4 dargestellt. Die zweite, die vierte und die siebente Transaktion TA2, TA4 und TA7 sind also aktiv, die restlichen Transaktionen befinden sich dagegen noch im Wartezustand.

Die wartenden Transaktionen TAx werden in Folge in bereits erwähnter Weise bearbeitet.

Zu beachten ist, dass es für die Warteschlangenverwaltung unerheblich ist, was Inhalt einer Transaktion TAx ist, etwa die Datensicherung oder ein Lese- beziehungsweise Schreibzugriff. Die Übertragung eines Datenbereichs wird also einer Transaktion TAx auf diesen Datenbereich gleichgesetzt.

Weiterhin wird eine einzige Warteschlange für alle Datenbereiche, hier die Instanzen einer Objektklasse OCx, gemeinsam genutzt. Die anstehenden Transaktionen TAx werden in dieser gereiht. Bezogen auf die einzelnen Datenbereiche wird diese in Folge sequentiell abgearbeitet, wobei bezogen auf die gesamte Warteschlange, wie gezeigt wurde, aber mehrere Transaktionen gleichzeitig ausgeführt werden können.

## Patentansprüche

1. Verfahren zur Übertragung von Daten von einem ersten Speicher in einen zweiten Speicher, wobei laufend Aufträge empfangen werden, Transaktionen (TAx) auf Teile dieser Daten anzuwenden,
**dadurch gekennzeichnet,**
- **dass** die Daten in mehrere Datenbereiche geteilt werden,
- **dass** ein Datenbereich dann übertragen wird, wenn für diesen keine Transaktionen (TAx) mehr anstehen und
- **dass** weitere, während und nach der Übertragung empfangene Aufträge, Transaktionen (TAx) auf diesen Datenbereich anzuwenden, ausgeführt werden, sobald die Übertragung beendet wird.

2. Verfahren nach Anspruch 1, **dadurch gekennzeichnet, dass** alle anstehenden Transaktionen (TAx) in eine Warteschlange gereiht und anschließend sequentiell abgearbeitet werden, wobei die Übertragung eines Datenbereichs einer Transaktion (TAx) auf diesen Datenbereich gleichgesetzt wird.

3. Verfahren nach Anspruch 2, **dadurch gekennzeichnet,**
- **dass** für alle Datenbereiche eine einzige Warteschlange gemeinsam genutzt wird und
- **dass** die Transaktionen (TAx) bezogen auf die einzelnen Datenbereiche sequentiell, bezogen auf die gesamte Warteschlange jedoch zumindest teilweise parallel, abgearbeitet werden.

4. Verfahren nach einem der Ansprüche 1 bis 3, **dadurch gegenzeichnet,**
- **dass** als erster Speicher ein flüchtiger Speicher vorgesehen wird,
- **dass** als zweiter Speicher ein nicht flüchtiger Speicher vorgesehen wird,
- **dass** als Transaktionen (TAx) Lese- und Schreibvorgänge vorgesehen werden,
- **dass** Lesevorgänge nur auf den flüchtigen Speicher angewendet werden und
- **dass** Schreibvorgänge auf den flüchtigen und nicht flüchtigen Speicher angewendet werden.

5. Verfahren nach Anspruch 4, **dadurch gegenzeichnet**, **dass** die Datenbereiche auf dem nicht flüchtigen Speicher als Dateien organisiert werden.

6. Verfahren nach einem der Ansprüche 1 bis 5, **dadurch gegenzeichnet, dass** als Datenbereich alle Instanzen einer Objektklasse (OCx) vorgesehen werden.

7. Verfahren nach einem der Ansprüche 1 bis 6, **dadurch gegenzeichnet, dass** in einem Datennetz zu verteilt vorliegenden Daten vorhandene Transaktionen (TAx) zentral koordiniert werden.

8. Vorrichtung zur Durchführung aller Schritte eines Verfahrens nach einem der Ansprüche 1 bis 7, wobei diese eine Schnittstelle zu einem ersten Speicher und zu einem zweiten Speicher sowie eine Schnittstelle zum Empfang von Aufträgen für Transaktionen (TAx) umfasst,
**dadurch gekennzeichnet,**
- **dass** Mittel zur Teilung der zu übertragenden Daten in mehrere Datenbereiche vorgesehen sind,
- **dass** Mittel zur Übertragung eines Datenbereichs vom ersten Speicher in den zweiten Speicher, abhängig davon, ob für diesen Datenbereich Transaktionen (TAx) anstehen, vorgesehen sind und
- **dass** Mittel zur Ausführung von Aufträgen für Transaktionen (TAx) auf einen Datenbereich, abhängig davon, ob dessen Übertragung vom ersten Speicher in den zweiten Speicher im Gang ist, vorgesehen sind.

9. Vorrichtung nach Anspruch 8, **dadurch gekennzeichnet, dass** diese eine Warteschlange zur Reihung und sequentiellen Abarbeitung aller anstehenden Transaktionen (TAx) umfasst, wobei die Übertragung eines Datenbereichs einer Transaktion (TAx) auf diesen Datenbereich gleichgesetzt ist.

10. Vorrichtung nach Anspruch 9, **dadurch gekennzeichnet,**
- **dass** diese eine einzige Warteschlange für alle Datenbereiche gemeinsam umfasst und
- **dass** diese Mittel zur sequentiellen Abarbeitung der Transaktionen (TAx) bezogen auf die einzelnen Datenbereiche beziehungsweise zur zumindest teilweise parallelen Abarbeitung der Transaktionen (TAx) bezogen auf die gesamte Warteschlange umfasst.
